# DEMANDE DE BREVET EUROPEEN

(11) **EP 4 371 814 A1**
(43) Date de publication de la demande: **22.05.2024**
(21) Numéro de dépôt: 23211273.0
(22) Date de dépôt: 21.11.2023
(51) Int. Cl.: B60N 2/14, B62J 1/08, B62K 5/08, B62M 3/00, B62K 3/16, B62K 5/003, B62K 7/00, B62M 6/85

(54) **VÉHICULE DE TRANSPORT DE TYPE QUADRICYCLE COMPORTANT UN CHASSIS, DES ASSISES ET DES MECANISMES À PROPULSION HUMAINE**

(30) Priorité: 21.11.2022 FR 2212099
(71) Demandeur: France Quadricycle, 92600 Asnières-sur-Seine (FR)
(72) Inventeur: SPILLMANN, Matthieu, 75017 Paris (FR); BODDAERT, Simon, 88300 NEUFCHATEAU (FR); D' ACREMONT, Antoine, 92130 Issy les Moulineaux (FR); SALLOIGNON, Thibault, 21290 BURE LES TEMPLIERS (FR); HAGEMANN, Patrick, 07646 Stadtroda (DE)
(74) Mandataire: Ipside

(57) **Abrégé**

L'invention concerne un véhicule (1) de transport de type quadricycle pour un ou plusieurs passager(s), comportant un châssis tubulaire rigide (10) monté sur deux essieux indépendants (12, 14) à deux roues chacun et supportant au moins un organe de direction (51, 52) relié à des roues directrices, des assises (31 ; 32 ; 33) réparties en différentes rangées parallèles, au moins un mécanisme (50) à propulsion humaine placé devant une assise et pourvu d'un organe de transmission de puissance (54) relié à une roue motrice (14a ; 14b), caractérisé en ce que l'une au moins des assises (31 ; 32 ; 33) est réglable au moins longitudinalement selon le sens de déplacement du véhicule (1) et en rotation selon un axe vertical.

## Description

### Domaine technique de l'invention

La présente invention concerne un véhicule de transport de type quadricycle comportant un châssis, des assises et au moins un mécanisme à propulsion humaine.

### Technique antérieure

Dans le domaine des véhicules de loisir et/ou de tourisme à propulsion humaine (mis en mouvement au moins en partie par la force physique de certains au moins de leur(s) utilisateur(s)), on connaît déjà les vélos ou les tandems qui permettent de transporter facilement une ou deux personne(s) sur une même structure de support (cadre + selle(s) + roues) grâce à un système de pédalier(s) et de guidon. Ces véhicules sont simples d'utilisation, pratiques, permettent de se déplacer aisément sur plusieurs dizaines de kilomètre à bonne allure, tout en faisant de l'exercice. Ils nécessitent cependant de posséder un bon équilibre, suffisamment de force physique et de préférence un équipement de protection adapté pour être vus d'une part et en cas d'accident d'autre part. Ils sont par ailleurs limités à une et parfois deux personnes.

On connaît également les tricycles à fonctionnant sur le même principe et pouvant transporter une personne ou deux personnes de front, toujours avec une propulsion humaine de type pédalier (voire maindalier). Ces véhicules qui disposent en général de sièges (et non de selles) sont donc un peu plus larges que les vélos/tandems et sont en général destinés à une autre utilisation, notamment en raison de leur plus grande stabilité.

Depuis plusieurs décennies se sont développés d'autres types de véhicules de loisir à propulsion humaine plus stables, mais également plus lourds, pour transporter à faible vitesse (moins de 25 km/h comme la loi l'oblige désormais) un plus grand nombre de personnes, pouvant aller de deux à parfois huit passagers (avec une moyenne située entre quatre et six inclus). Ces véhicules, en général de type quadricycle, possèdent ainsi un châssis tubulaire mécanosoudé présentant une bonne rigidité, deux essieux, dont au moins un essieu directeur et au moins un essieux moteur. Pour cela, le quadricycle est équipé de plusieurs assises, le plus souvent individuelles, se présentant sous la forme de selles ou le plus souvent sous forme de sièges assez rudimentaires, voire de bancs, devant certains au moins desquels sont placés des pédaliers munis chacun d'une chaîne de transmission reliée aux roues motrices. En général un guidon ou un volant unique sert à diriger le véhicule pour lui faire prendre des virages. Le désavantage de ces véhicules est qu'ils ne sont pas très pratiques à utiliser, souvent inconfortables, lourds et très difficiles à manier, peu polyvalents, fatigants, inadaptés aux personnes âgées et/ou à mobilité réduite et/ou aux enfants, beaucoup trop volumineux pour être utilisés sur des pistes cyclables et très chers à l'achat (ils sont en général loués par des collectivités locales ou exploités par des entreprises privées).

Certains de ces véhicules sont très prisés dans les grandes villes pour transporter les touristes, avec le chauffeur placé devant et les passagers placés derrière (limités à 4 passagers, par exemple deux de face et deux de dos). Le désavantage de ces véhicules est que les passagers ne participent absolument pas à la propulsion car seul le chauffeur pédale.

Quelques modèles un peu originaux ont également été proposés, soit formant une sorte d'anneau autour desquels tous les participants sont assis en rond, induisant une cinématique très compliquée, soit assis face à face, les personnes ayant de ce fait une vue certes latérale du paysage mais potentiellement obstruée et déroutante pour les utilisateurs (l'impression de pédaler vers l'avant alors que le véhicule avance « sur le côté ») .

Enfin, on connaît les véhicules électriques de type « voiturette de golf » qui entrent dans une autre catégorie car les passagers ne fournissent aucun effort musculaire et sont donc totalement passifs. Ces véhicules possèdent une batterie, une autonomie réduite, un poids important (rapporté au nombre de passagers transportés), un prix élevé et ils ne sont pas soumis aux mêmes normes et règles de circulation.

Il n'existe donc pas à l'heure actuelle de véhicule de loisir ou de tourisme à propulsion humaine de type quadricycle, occupant une faible largeur pour pouvoir respecter les normes d'utilisation sur piste cyclable, susceptible de transporter en sécurité plus de 6 personnes à une vitesse pouvant atteindre 25 km/h, écologique, totalement modulable et polyvalent, facile d'utilisation, très maniables, adapté à la fois aux personnes âgées et/ou à mobilité réduite et aux enfants, suffisamment léger et résistants à la fois, et avec une bonne autonomie.

### Présentation de l'invention

La présente invention vise à remédier à ces inconvénients et propose ainsi un véhicule familial de loisir ou de tourisme à propulsion humaine innovant qui soit propre, léger, stable et maniable, performant (couple, vitesse), peu volumineux (largeur notamment) et adapté à toutes et tous, notamment aux personnes âgées et/ou souffrant d'un handicap moteur ou autre (autisme, surdité, cécité).

A cet effet, selon un premier aspect, la présente invention se rapporte à un véhicule de transport de type quadricycle pour un ou plusieurs passager(s), comportant un châssis tubulaire rigide monté sur deux essieux indépendants à deux roues chacun et supportant :
- au moins un organe de direction relié à des roues directrices,
- des assises réparties en différentes rangées parallèles,
- au moins un mécanisme à propulsion humaine placé devant une assise et pourvu d'un organe de transmission de puissance relié à une roue motrice,
caractérisé en ce que l'une au moins des assises est réglable au moins longitudinalement selon le sens de déplacement du véhicule et en rotation selon un axe vertical.

L'invention est mise en oeuvre selon les modes de réalisation et les variantes exposées ci-après, lesquelles sont à considérer individuellement ou selon toute combinaison techniquement opérante.

Avantageusement, l'une au moins des assises mobiles est montée sur un charriot rotatif pour l'amener d'une première position d'utilisation alignée selon le sens de déplacement du véhicule vers l'avant à une deuxième position pivotée à environ 90° selon un axe vertical et orientée vers l'extérieur du châssis du véhicule.

Cette solution permet un accès facilité au véhicule, notamment pour les personnes à mobilité réduite telles que les personnes présentant un handicap et/ou les personnes âgées ou encore pour les enfants.

De manière complémentaire, ladite assise mobile considérée est par ailleurs mobile en translation le long de glissières parallèles intégrées au charriot pour l'amener notamment de la deuxième position vers une troisième position dans laquelle ladite assise dépasse latéralement de l'extérieur du châssis.

Cette solution améliore encore l'accès au places assises sans pour autant augmenter la largeur du véhicule.

De préférence, plusieurs assises monoplace adjacentes transversalement sont démontables et remplaçables par une unique assise multiplaces telle qu'un banc.

Cette solution permet une grande modularité et polyvalence du véhicule dans son utilisation en apportant un côté convivial et une esthétique particulière qui lui est propre.

Selon un mode de réalisation préférée de la présente invention, chaque mécanisme à propulsion humaine comporte un pédalier relié à une roue motrice à l'aide d'un organe mobile de transmission de puissance tel qu'une chaine à maillons articulés, des engrenages, une came ou une courroie crantée.

Cette solution permet à chaque occupant du véhicule de participer collectivement à l'effort de transmission de la puissance et permet donc d'améliorer potentiellement les capacités motrices du véhicule. Elle apporte un côté convivial à son utilisation en faisant participer chacun.

De préférence, l'un au moins des pédaliers est en prise directe avec la roue motrice considérée à l'aide dudit organe mobile de transmission de puissance. C'est donc la chaîne, la courroie, la came ou les engrenages qui transmet(tent) l'énergie humaine à la roue motrice.

Selon une variante de réalisation, l'un au moins des pédaliers est relié à une génératrice intermédiaire de courant à l'aide dudit organe mobile de transmission de puissance, ladite génératrice intermédiaire alimentant en énergie électrique un moteur intégré à la roue motrice considérée. La chaîne, la courroie, la came ou les engrenages ser(ven)t d'intermédiaire entre les pédales du pédalier et le moteur électrique du moyeu de la roue motrice.

Selon un mode particulier de réalisation de la présente invention, les organes mobiles de transmission de puissance sont indépendants et les pédaliers sont débrayables et totalement indépendants les uns des autres, permettant à chaque passager de pédaler quand il le souhaite, et avec l'intensité et le rythme qu'il souhaite donner à chaque instant.

Cette solution permet à tout occupant de choisir de participer ou non à l'effort collectif de propulsion du véhicule selon ses capacités physiques et ses envies. Elle permet par exemple aux personnes à mobilité réduites, aux personnes âgées ou aux enfants de profiter simplement de la ballade sans produire d'effort physique, ou à certaines personnes actives dans la propulsion de se reposer pendant une durée déterminée.

Selon une caractéristique complémentaire, l'un au moins des pédaliers est mobile verticalement en translation le long d'un support tubulaire et son organe mobile de transmission de puissance associé présente une longueur variable de sorte que ledit pédalier peut être déplacé vers une position supérieure d'élévation et se transformer en maindalier.

Cette solution permet d'adapter la propulsion du véhicule à l'utilisation des mains des occupants, que ce soit pour des raisons purement physiques (personne tétraplégique) ou de souhait/confort d'utilisation (personne habituée à ce type de propulsion).

Préférentiellement, l'ensemble constitué par au moins un pédalier, son support et son organe mobile de transmission de puissance est totalement escamotable du châssis.

Selon un aspect particulièrement intéressant de la présente invention, l'un au moins des pédaliers est pourvu d'une assistance électrique comprenant notamment un moteur électrique de puissance nominale inférieure ou égale à 250W connecté à une batterie.

Cette solution permet d'améliorer la propulsion du véhicule en y ajoutant une force complémentaire électrique d'assistance au pédalage.

Selon un aspect complémentaire, le véhicule comporte un premier moteur à couple élevé, typiquement entre environ 100 et 200 Nm, et un seconde moteur à couple faible, typiquement entre environ 40 et 80 Nm, connectés au même mécanisme à propulsion humaine ou à différents mécanismes à propulsion humaine.

Cette solution permet par exemple de monter une pente avec le moteur à couple important afin de soulager le plus possible les utilisateurs, le moteur à plus faible couple prenant le relai une fois une certaine vitesse attente et/ou la pente gravie et le véhicule évoluant sur une route plane ou en descente.

Avantageusement, le châssis tubulaire est recouvert au moins partiellement d'un panneau photovoltaïque pour recharger la batterie.

Cette solution permet de rendre le véhicule le plus autonome possible en termes de source d'énergie pour le(s) moteur(s) utilisé(s) pour l'assistance au pédalage.

Dans le même état d'esprit et de manière complémentaire, le véhicule comporte en outre au moins un système de freinage régénératif relié à la batterie pour recharger cette dernière.

Selon une caractéristique particulière de la présente invention, chaque essieux comporte une suspension à lame réalisée en matériau composite à base de carbone.

Cette solution permet d'alléger le véhicule tout en apportant un meilleur confort d'utilisation sur route, notamment de mauvaise qualité, et en facilitant sa conduite.

De préférence, l'essieux avant comporte un unique amortisseur à lame disposé transversalement et faisant office de barre anti-roulis tandis que chaque roue de l'essieux arrière comporte son propre amortisseur à lame disposé longitudinalement.

Selon un caractéristique particulièrement intéressante, le châssis du véhicule présente une largeur inférieure ou égale à 1m15 et de préférence inférieur ou égale à 1m10.

Cette solution permet au véhicule d'être homologué afin de pouvoir emprunter les pistes cyclables et être assimilé à un vélo (pas de plaque d'immatriculation, pas besoin de permis).

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1 est une vue en perspective arrière d'un véhicule à propulsion humaine de type quadricycle conforme à la présente invention selon un premier mode de réalisation et dans une première configuration d'utilisation,
[Fig. 2] la figure 2 est une vue en perspective avant de la figure 1,
[Fig. 3] la figure 3 est une vue de côté des figures 1 ou 2,
[Fig. 4] la figure 3 est une vue de face de la figure 3,
[Fig. 5] la figure 5 est une vue en perspective similaire à la figure 1 mais dans laquelle un siège est pivoté dans une seconde configuration d'utilisation,
[Fig. 6] la figure 6 est une vue similaire à la figure 4 avec ledit siège pivoté et avancé dans une troisième configuration d'utilisation,
[Fig. 7] la figure 7 est une vue de détail de la figure 3 avec un siège incliné et avancé dans une quatrième configuration d'utilisation,
[Fig. 8] la figure 8 est une autre vue de détail en perspective d'une variante de réalisation des figures précédentes dans laquelle le véhicule est équipé d'un maindalier,
[Fig. 9] la figure 9 est une vue de détail d'un système d'amortissement avant du véhicule,
[Fig. 10] la figure 10 est vue de détail d'un système d'amortissement arrière du véhicule,
[Fig. 11] la figure 11 est vue de côté d'une variante de réalisation des figures précédentes,
[Fig. 12] la figure 12 est vue de détail d'une variante de réalisation de moyens de propulsion humaine, et
Fig. 13] la figure 13 est vue de détail d'une variante de roue motrice.

### Description des modes de réalisation

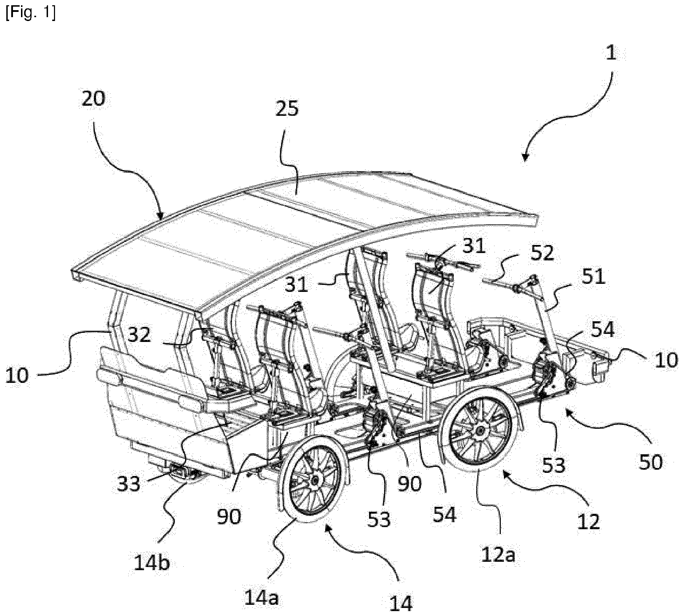

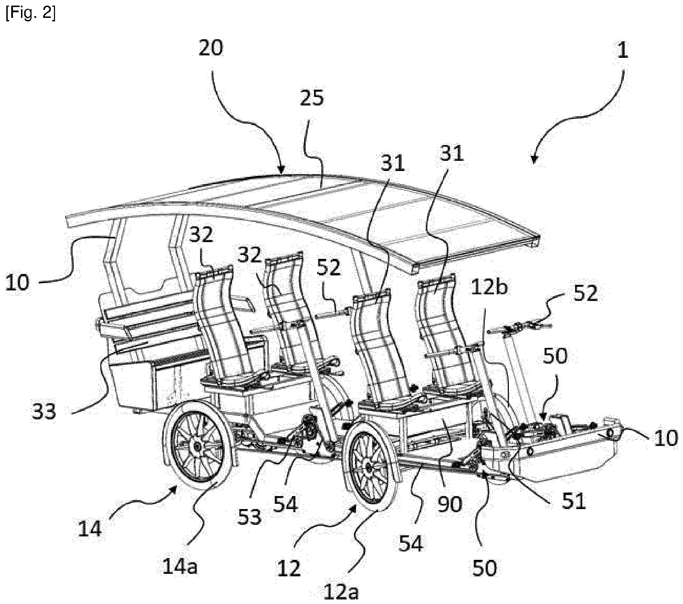

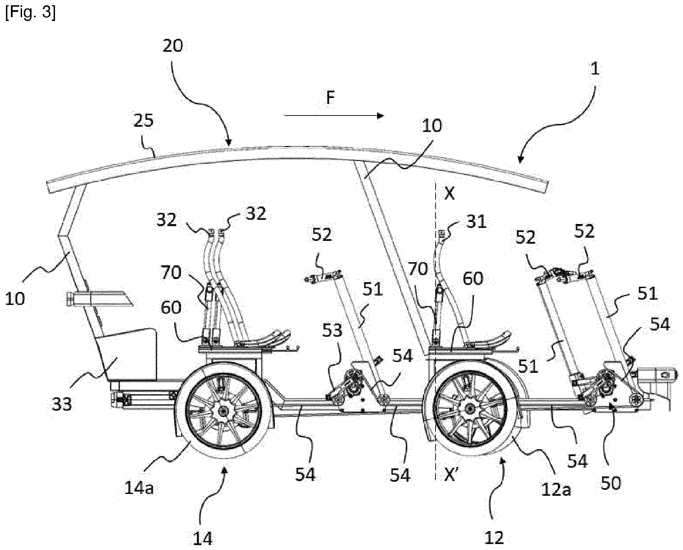

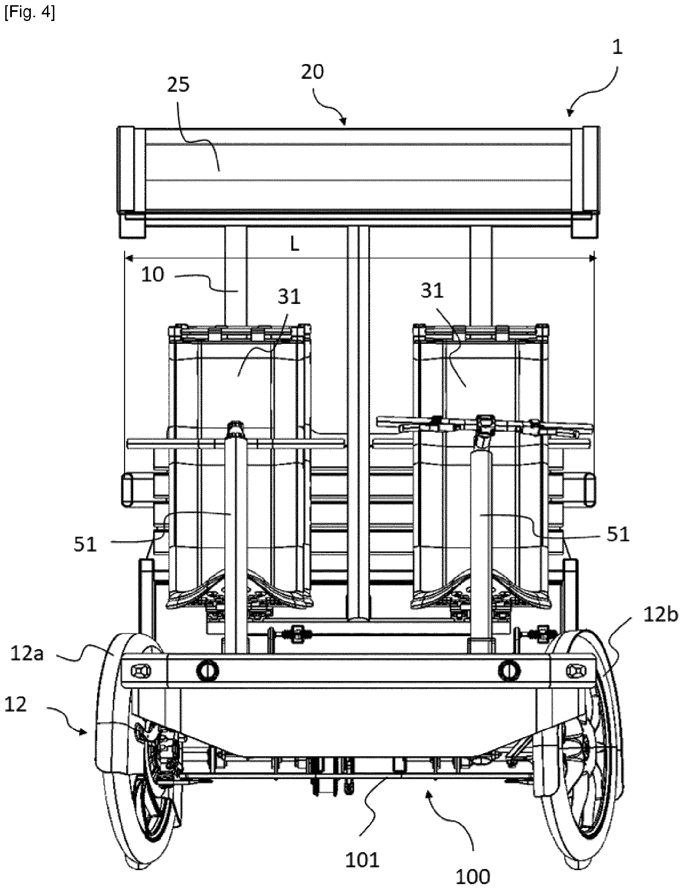

Les figures 1 à 7 représentent un premier mode de réalisation d'un véhicule 1 de transport terrestre à propulsion humaine pour une ou plusieurs personnes, et en particulier un véhicule de loisir ou de tourisme de type quadricycle. Ce type de véhicule peut par exemple être utilisé par des collectivités locales et loués par des entreprises publiques ou privées dans les villes touristiques, par exemple les stations balnéaires, ou pour un usage médical.

La présente description est donnée à titre non limitatif, chaque caractéristique d'un mode de réalisation pouvant être combinée à toute autre caractéristique de tout autre mode de réalisation.

On note, dès à présent, que les figures ne sont pas nécessairement à l'échelle, sans que cela nuise à leur compréhension.

Conformément à l'invention, le véhicule 1 de transport à propulsion humaine comporte un châssis 10, par exemple en tubes métalliques mécanosoudées, formant une structure porteuse rigide reposant sur deux essieux indépendants 12 et 14, à savoir dans le cas présent un essieu avant directeur 12 et un essieu arrière moteur 14 (en variante, les deux essieux avant 12 et arrière 14 peuvent être moteurs si besoin). Selon le sens F de déplacement vers l'avant du véhicule 1, l'essieu avant directeur 12 comporte une roue avant droite 12a et une roue avant gauche 12b tandis que l'essieu arrière moteur 14 comporte une roue arrière droite 14a et une roue arrière gauche 14b.

Ce châssis 10 est recouvert par un toit de protection 20, de préférence galbé (pour l'aérodynamisme et l'esthétique), rigide, semi rigide ou souple. Ce toit 20 peut dans certaines variantes être escamotable, par exemple enroulable dans le cas d'une toile souple, ou amovible dans le cas de panneau(x) rigide(s) ou semi rigide(s).

Dans le cas présent, une partie importante de ce toit 20 supporte (ou est constitué par) un panneau photovoltaïque 25 dont l'utilité sera décrite ultérieurement.

Le châssis 10 supporte également plusieurs rangées d'assises disposées parallèlement les unes derrière les autres selon le sens F de circulation du véhicule 1, par exemple une première rangée avant composée de deux sièges indépendants 31, une deuxième rangée médiane composée également de deux sièges indépendants 32 et une troisième et dernière rangée arrière composée par exemple d'un unique banc 33 multi places.

Devant certains de ces sièges (en particulier les sièges 31 et 32) est disposé un mécanisme 50 à propulsion humaine, comportant une structure de support 51 dressée vers le haut, par exemple un tube métallique à section carrée pourvu de poignées latérales de préhension 52. Le mécanisme 50 à propulsion humaine comporte par ailleurs un pédalier 53 de type commun muni de pédales latérales et une chaîne de transmission à maillons 54.

Un des ensemble constitué par un tube de support 51 et une poignée 52, de préférence celui placé devant l'assise 31 placée à l'avant gauche du véhicule 1, forme un organe de direction de type guidon liée aux roues directrices 12a et 12b par un système connu et non décrit ici. Les autres poignées 52 permettent principalement aux occupants du véhicule 1 de se tenir ou simplement de reposer leurs mains.

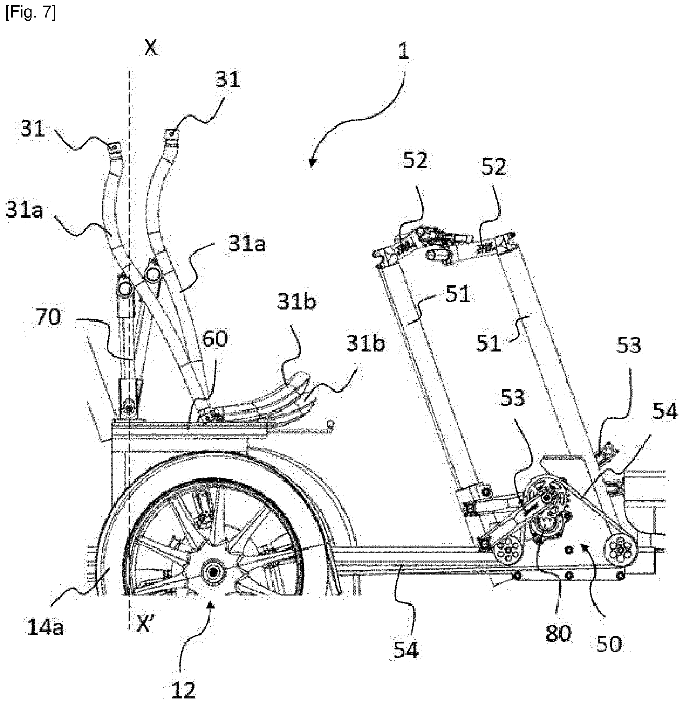

Les chaînes 54 de droite et de gauche sont indépendantes les unes des autres et sont reliées respectivement aux roues arrière motrices 14a et 14b. L'utilisation de pignons intermédiaires est également prévue pour tendre les chaînes 54, comme cela est visible plus en détail sur la figure 7.

Chaque pédalier 53 d'une même rangée et d'une même ligne est également totalement indépendant et débrayable des autres par l'utilisation de roues libres (par exemple de la marque déposée ENVIOLO ^{®}) de sorte que chaque occupant d'une assise devant laquelle un mécanisme à propulsion humaine 50 est placé peut choisir de l'utiliser ou non, au rythme et avec la force qu'il souhaite.

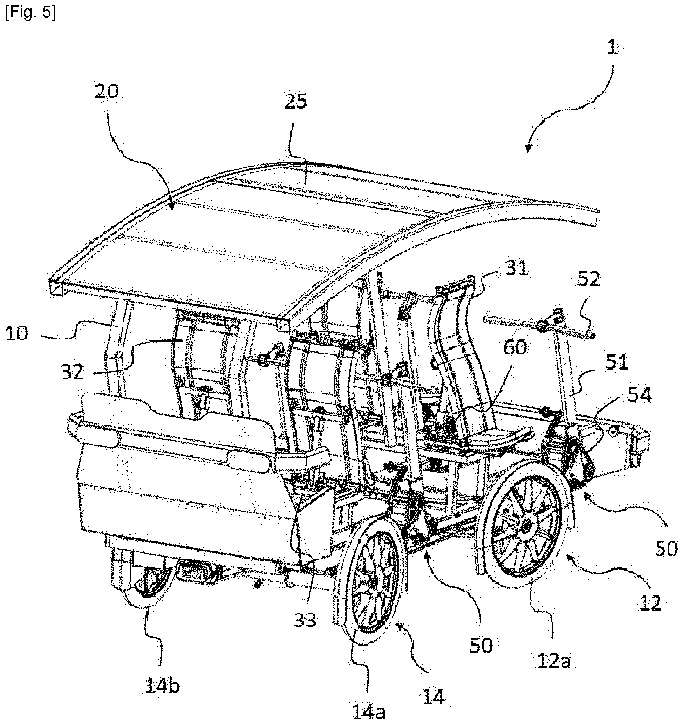

Comme cela est visible sur la figure 1 puis sur la figure 5, l'une au moins des assises mobiles, par exemple l'assise 31 de droite selon le sens de F déplacement du véhicule 1 vers l'avant, est montée sur un charriot rotatif 60 permettant de l'amener d'une première position d'utilisation alignée avec ledit sens F de déplacement dudit véhicule 1, comme illustré sur les figures 1 à 4, à une deuxième position pivotée à environ 90° selon un axe vertical XX' et orientée vers l'extérieur du châssis 10 du véhicule 1, comme cela est visible sur la figure 5.

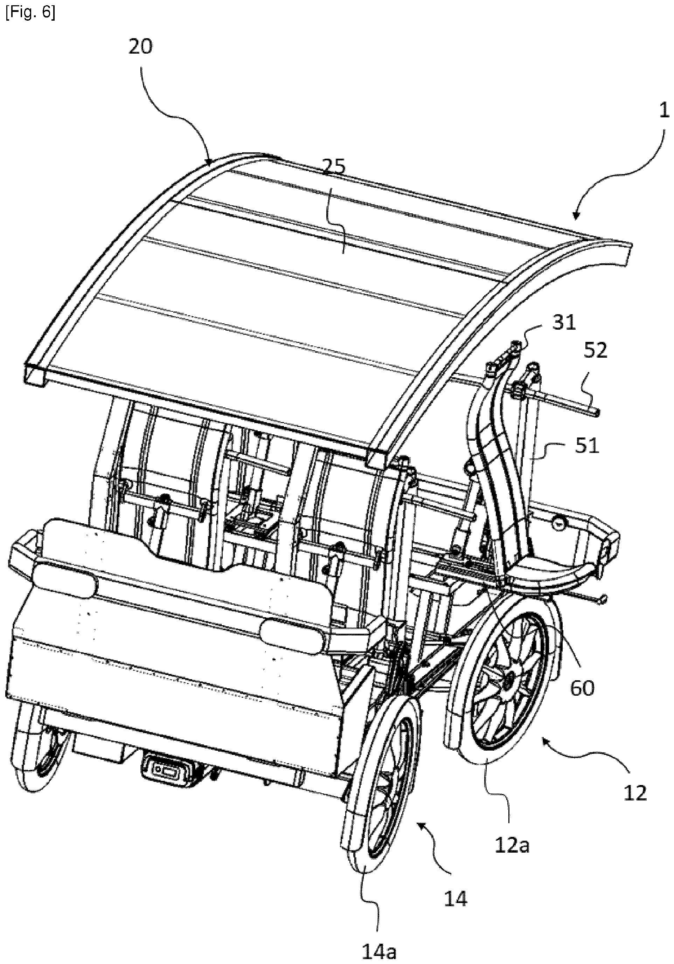

L'assise considérée 31 est par ailleurs mobile en translation le long de glissières parallèles intégrés au charriot 60 pour l'amener notamment de la deuxième position (figure 5) vers une troisième position dans laquelle ladite assise 31 dépasse latéralement de l'extérieur du châssis 10 de plusieurs centimètres, et de préférence de plusieurs dizaines de centimètres, (typiquement entre environ 10 et 30 centimètres), comme cela est illustré sur la figure 6.

Cette solution combinant pivotement et translation, jamais vue sur ce type de véhicule à propulsion humaine, permet un accès notablement facilité aux personnes à mobilité réduite et/ou aux personnes âgées ou bien encore aux enfants.

Par ailleurs, comme illustré sur la figure 7, certaines assises, en particulier les assises 31 et 32, et plus particulièrement l'assise 32 du conducteur ou du passager, présentent un dossier inclinable de plusieurs degrés par rapport à sa position initiale, typiquement jusqu'à environ 60 degrés vers l'arrière, afin de proposer une position agréable et adapté à la propulsion humaine. Cette inclinaison est rendu possible grâce à un bras articulé arrière 70 et aux glissières intégrées au charriot 60 de sorte que l'inclinaison vers l'arrière du dossier 31a du siège 31 provoque l'avancée de la base 31b du siège 31 (voir figure 7).

Enfin, certaines de ces assises, en particulier les assises 31 et 32, sont également réglables longitudinalement sur plusieurs centimètres, et de préférence sur plusieurs dizaines de centimètres (typiquement entre environ 10 et 30 centimètres), selon le sens F de déplacement du véhicule 1 grâce aux glissières intégrées au charriot 6, ce qui permet de régler la position des pieds des occupants, en particulier des enfants, par rapport aux pédales du pédalier 53. Ce réglage longitudinal d'avant en arrière, et inversement, est indépendant de l'inclinaison du dossier.

Comme cela est représenté sur la figure 7, le pédalier 53 de certaines au moins des assises, par exemple certains sièges des assises avant 31 et/ou certains sièges des assises médianes 32, comportent un moteur d'assistance électrique 80 permettant de faciliter la propulsion. Ainsi, dans le cas présent, les mécanismes à propulsion humaine 50 des assises avant 31 comportent chacun un moteur 80 à couple élevé, par exemple compris entre environ 100 et 200 Nm, tandis que les mécanismes à propulsion humaine 50 des assises médianes 32 comportent chacune un moteur électrique 80 à faible couple, par exemple entre environ 40 et 80 Nm (l'inverse étant bien entendu possible). Les moteurs 80 à couple élevé des assises avant 31 permettent ainsi de faciliter le démarrage du véhicule 1, et notamment en côte, tandis que les moteurs 80 à faible couple des assises médianes 32 fournissent une assistance électrique modérée utilisable principalement sur le plat ou en descente.

Chacun des moteurs 80 est relié à une batterie 90 logée par exemple sous les assises 31 et/ou 32 (selon le nombre de pédaliers équipés d'un moteur d'assistance électrique). Ces batteries sont par ailleurs alimentée en énergie par le panneau photovoltaïque 25.

Certains de ces moteurs 80 intègrent par ailleurs un système de freinage régénératif relié à chaque batterie 90 pour recharger cette dernière.

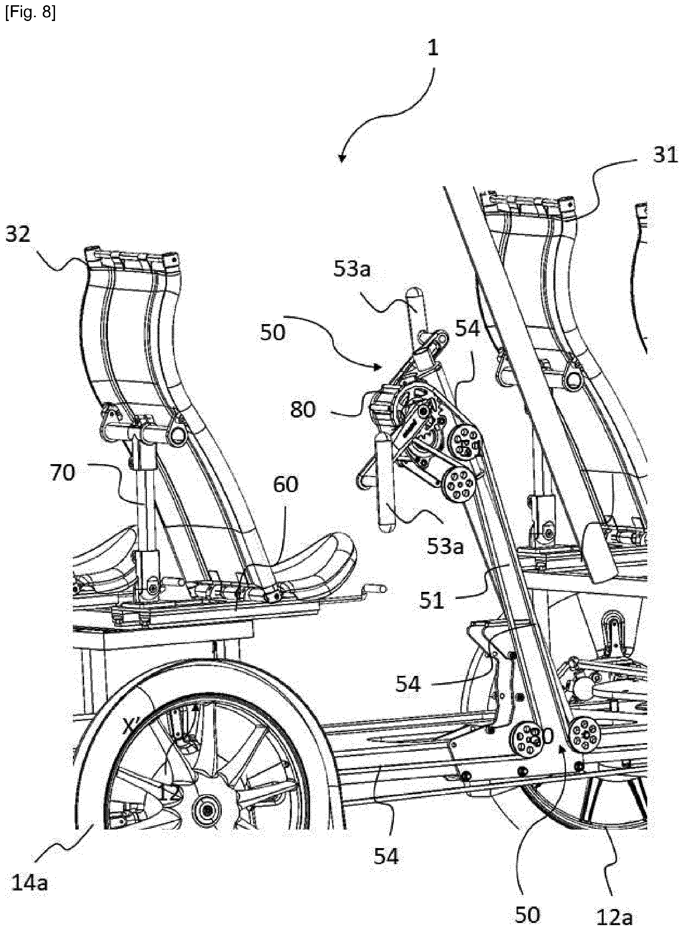

Comme cela est représenté sur la figure 8, le pédalier 53 d'une des assises, par exemple une assise médiane 32, est déplaçable vers le haut le long du support tubulaire 51 afin d'être placé sensiblement et face du torse d'un occupant dudit siège de manière à se transformer en maindalier 53a, c'est-à-dire un mécanisme à propulsion humaine utilisant les mains de l'utilisateur pour pédaler. La chaîne 54 est bien entendu à longueur variable, et notamment extensible si besoin pour tenir compte de ce changement de position des pédales du pédalier 53 et sa transformation en maindalier 53a. On peut également noter sur cette figure 8 que le pédalier 53 de gauche et son tube de support 51 associé ont été totalement retirés.

L'ensemble pédalier 53 / maindalier 53a peut également être installé à différents endroits du véhicule et notamment sur le dossier de certains siège, ce qui peut permettre de les régler dans toutes les directions possibles, notamment à l'aide de bras articulés (non représentés), et aussi de les « ranger » le long des sièges quand on monte ou descend du véhicule ou quand on ne les utilise pas afin d'avoir plus d'espace disponible.

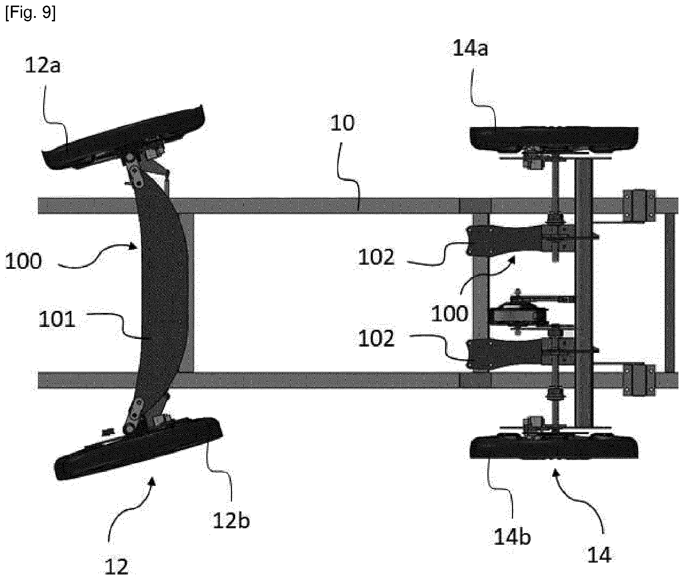

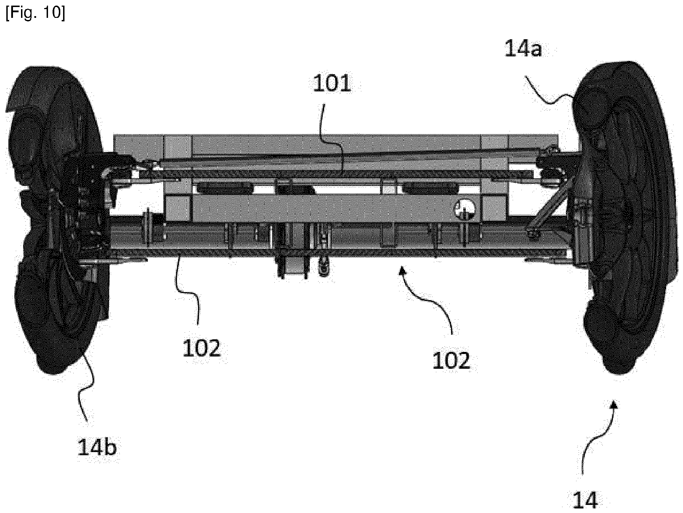

Comme cela est visible sur les figures 9 et 10, chaque essieux 12 et 14 comporte une suspension à lame 100 réalisée en matériau composite à base de carbone. Plus spécifiquement, l'essieux avant 12 comporte un unique amortisseur 101 à lame disposé transversalement et faisant office de barre anti-roulis tandis que chaque roue 14a et 14b de l'essieux arrière 14 comporte son propre amortisseur 102 à lame, disposé longitudinalement.

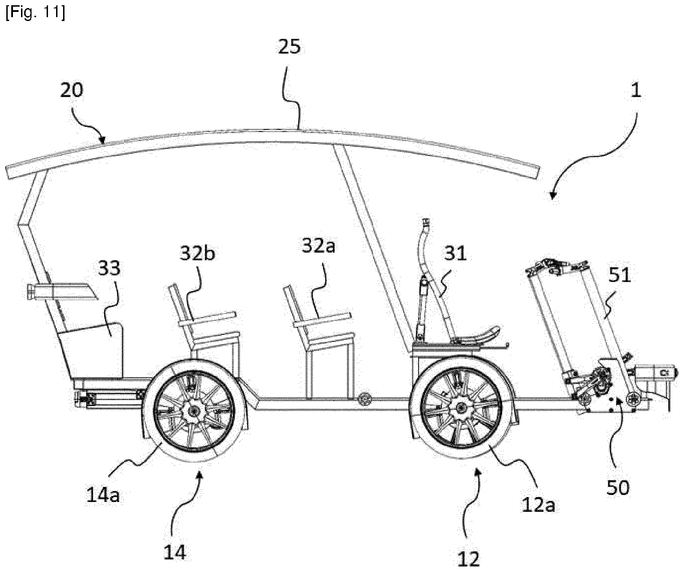

Comme cela est visible sur la figures 11, certaines assises, en particulier les assises monoplace 32 de la rangée médiane, et certains mécanismes 50 à propulsion humaine, par exemple ceux qui sont placés normalement devant lesdites assises médianes 32, sont démontables et remplaçables chacune par des assise multiplaces parallèles telles que des banc 32a et 32b. Ces deux bancs 32a et 32b sont montés l'un derrière l'autre de sorte que le véhicule 1 comporte ainsi quatre rangées d'assises et peut transporter facilement 8 personnes (4 par rangée), voire 10 si certains des occupants sont des enfants.

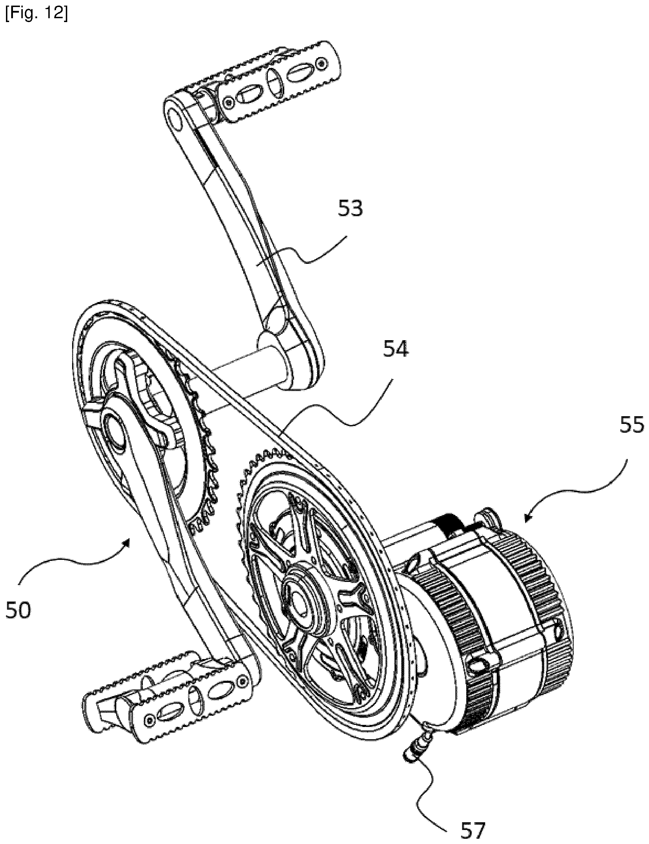

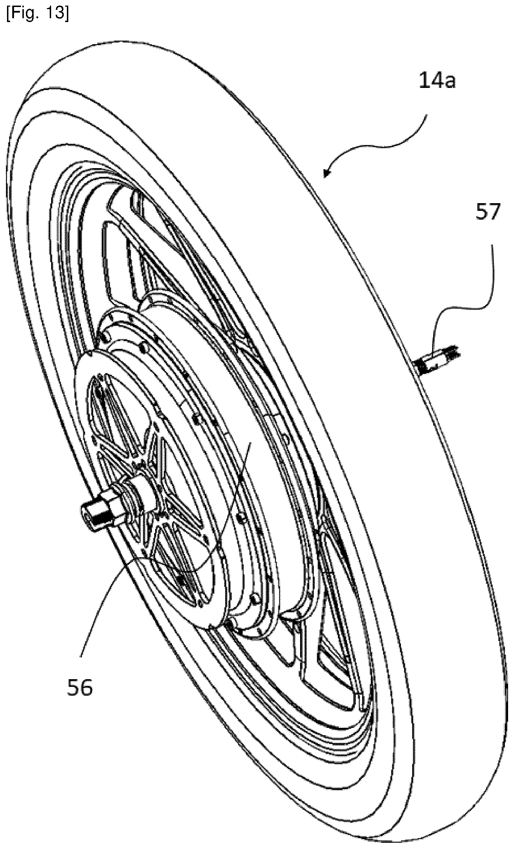

Selon une variante de réalisation du mécanisme à 50 à propulsion humaine illustré par les figures 12 et 13, au moins un des pédaliers 53 (et/ou un des maindaliers 53a) est relié à une génératrice de courant 55, par exemple à l'aide d'un organe mobile intermédiaire de transmission de puissance tel qu'une chaine 54 (selon le même principe que la chaîne 54 reliant directement le pédalier 53 à un pignon d'une roue motrice dans les modes de réalisation des figures 1 à 11). C'est ensuite cette génératrice 55 qui va alimenter en énergie électrique, grâce à un câble 57 de connexion, un moteur électrique 56 intégré par exemple dans un moyeu d'une des roues motrices 14a ou 14b.

Bien entendu, la chaîne 53 peut être remplacée par une courroie, des engrenages, ou encore une came.

Plusieurs mécanisme à 50 à propulsion humaine de ce type peuvent être implantés dans le véhicule et soit disposer chacun de leur propre génératrice 55, soit être reliés à une seule génératrice 55 commune de plus forte puissance. La ou les génératrice(s) 55 fait/font ensuite tourner la ou les roue(s) motrice(s) 14a et/ou 14b de manière connue à l'aide du moteur électrique 56 intégré au moyeu de à ladite roue motrice concernée, comme indiqué précédemment. Le moteur électrique 56 peut par ailleurs être relié à la batterie 90 décrite précédemment à l'aide du câble de connexion 57.

Le véhicule 1 à propulsion humaine de la présente invention présente aussi la particularité de posséder un châssis 10 qui mesure moins de 1m15 de largeur L hors tout et de préférence moins de 1m10 pour respecter les nomes actuellement en vigueur lui permettant de pouvoir rouler sur des pistes cyclables, tout en pouvant transporter jusqu'à 8 personnes à 25 km/h sans difficulté, avec une autonomie de près de 80 à 100 km (selon la charge de la batterie, la puissance des moteurs, leur utilisation, les conditions de déplacement, le poids des occupants, l'ensoleillement).

Le véhicule 1 est particulièrement adapté aux personnes à mobilité réduite et facilite notamment la reprise douce et progressive des membres inférieurs et de la santé de manière générale. Il permet d'embarquer jusqu'à 6 personnes, et notamment des personnes âgées, des autistes, ··· Ce marché se décompose en 2 segments : handicap et personnes âgées. Sur le plan mondial, le handicap représente plus de 1 milliard de personnes.

Dans le domaine de la santé au sens large, près de 13 500 établissements travaillant dans le domaine du handicap et près de 11 000 établissements travaillant dans le domaine des personnes âgées pourraient potentiellement être intéressés par ce type de véhicule rien qu'en France.

Le véhicule conforme à l'invention serait adapté à la grande partie de ces établissements, soit environ 15 000, dont 80 % des résidents des établissements recevant des personnes handicapées (autisme, trisomie 21, troubles neurologiques divers et plus ou moins profonds), 60 % des résidences séniors et résidences de service, 50 % Centre de Rééducation Fonctionnel (rééducation du col du fémur par exemple) et 30% des établissements recevant des personnes âgées de type EHPAD.

Dans le domaine des loisirs et du tourisme, plus de 700 loueurs de vélo ayant un parc supérieur à 50 vélos sont recensée en France sur différents sites, tels que de centres ville historiques, des sites naturels protégés (parcs nationaux/régionaux, marais, littoral), des sites touristiques majeurs (châteaux, Mont St Michel, parcs d'attractions), des circuits dédiés ou encore des bases de loisir.

Il doit être bien entendu que la description détaillée de l'objet de l'invention, donnée uniquement à titre d'illustration, ne constitue en aucune manière une limitation, les équivalents techniques étant également compris dans le champ de la présente invention.

Ainsi, le véhicule peut comporter quatre roues directrices pour réduire notablement le rayon de braquage et rendre la conduite plus facile et pratique, notamment sur site où l'espace est réduit (centre-ville).

Les deux essieux 12 et 14 peuvent être des essieux moteurs si besoin, afin d'améliorer la motricité et la tenue de route et de mieux répartir les forces de propulsion.

Des ceintures/harnais de sécurité peuvent être prévus pour les pédaleurs en ressentant le besoin (enfants notamment) ou les personnes à mobilité réduite (PMR).

Des accoudoirs rabattables permettant un accès aisé peuvent être prévus pour chaque pédaleur. Ces accoudoirs posséderaient par exemple une poignée de maintien (rabattable ou non) en leur extrémité afin d'offrir le moyen aux utilisateurs de bien se maintenir en position lors de phases d'efforts plus importants, et de se sécuriser pendant les virages ou de s'aider pour la montée/descente du véhicule.

Des appui-têtes ergonomiques peuvent être incorporés dans les sièges pour un confort amélioré, notamment pour une utilisation avec des personnes à mobilité réduite.

Des cale-pieds peuvent être ajoutés, notamment dans l'hypothèse où le système de transmission est retiré, ce qui peut apporter un sentiment de sécurité et évite aux pieds de pendre dans le vide

Un plancher peut recouvrir la partie inférieure du châssis pour éviter d'exposer les utilisateurs à d'éventuelles blessures (pieds qui glissent des pédales), faciliter la montée/descente du véhicule, en particulier pour les enfants et les personnes à mobilité réduite.

La chaine peut être remplacée par une courroie crantée, des engrenages, une came ou tout autre moyen équivalent de transmission de puissance mécanique.

Certains sièges, voire certaines rangées complètes de sièges, peuvent être remplacées par des coffres, de préférence à fermeture sécurisée, pour pouvoir y ranger des courses, des accessoires (accessoires de plage ou de sport), ou des objets personnels (sac, vêtements, cartables, etc.). De par ses dimensions relativement compactes, et notamment sa largeur réduite, une version purement « logistique » du véhicule conforme à la présente invention pourrait même être envisagée pour transporter des charges (colis par exemple), à la manière de certains triporteurs ou vélo cargos, les coffres étant alors remplacés par un caisson à volume de chargement important, éventuellement réfrigéré. Le système de glissière latéral des sièges pour faciliter l'accès aux PMR pourrait également aussi servir pour la livraison de colis en sortant le caisson sur les côtés et/ou l'arrière du véhicule, et donc faciliter la préhension de charges importantes.

Au contraire, une version plus orientée vers le tourisme et les loisirs de plein air pourrait comprendre une ou plusieurs tablettes/tables amovibles (articulées/rabattables) pour pique-niquer, voire pour travailler.

Cette modularité et le passage d'une version à l'autre est rendue encore plus facile par l'intégration de génératrices de courant qui permettent d'éliminer tout ou partie des transmissions par chaine ou courroie, lesquelles occupent un espace difficilement aménageable.

L'intérêt est donc pour les collectivités d'avoir un seul véhicule pédagogique et actif pour réaliser de nombreux services :
- Transport scolaire d'enfants qui ne sont pas encore en âge de faire du vélo, pour leur « apprendre la route » avant de les mettre sur des vélos et sur la voie publique, tout en assurant leur sécurité avec un conducteur pédagogue ; dans cette hypothèse, les sièges peuvent aussi être des selles de cyclistes et/ou les pédaliers pour enfants peuvent n'être reliés à rien et ne constituer alors qu'un outil pédagogique pour apprendre l'intérêt de se déplacer à vélo afin de préserver l'environnement, vu la faible production d'énergie ou de puissance des jeunes enfants (voire aucune puissance sur les pédaliers tournent « à vide »),
- Transport de seniors ou de personnes à mobilité réduite (PMR) dans les institut médicoéducatifs (IME) ou les EHPAD, pour leur proposer un exercice physique adapté, dans un confort,
- Transport de colis ou de courses, notamment pour les seniors,
- Transport de touristes toutes générations confondues, donc inclusif, etc.

Cette mutualisation et ce partage d'un même véhicule entre de nombreux utilisateurs et pour différentes utilisations va dans le sens d'une restriction des ressources terrestres utilisées (métaux rares, ···), le mode actif de pédalage complétant cette sobriété d'utilisation en limitant les capacités de stockage de la batterie et les dimensions du moteur.

## Revendications

1. Véhicule (1) de transport de type quadricycle pour un ou plusieurs passager(s), comportant un châssis tubulaire rigide (10) monté sur deux essieux indépendants (12, 14) à deux roues chacun et supportant :
- au moins un organe de direction (51, 52) relié à des roues directrices (12a, 12b),
- des assises (31 ; 32 ; 33) réparties en différentes rangées parallèles,
- au moins un mécanisme (50) à propulsion humaine placé devant une assise et pourvu d'un organe de transmission de puissance (54) relié à une roue motrice (14a ; 14b),
**caractérisé en ce que** l'une au moins des assises (31 ; 32 ; 33) est réglable au moins longitudinalement selon le sens de déplacement (F) du véhicule (1) et en rotation selon un axe vertical (XX').

2. Véhicule (1) selon la revendication 1, **caractérisé en ce que** l'une au moins des assises mobiles (31 ; 32 ; 33) est montée sur un charriot rotatif (60) pour l'amener d'une première position d'utilisation alignée selon le sens de déplacement (F) du véhicule (1) vers l'avant à une deuxième position pivotée à environ 90° selon un axe vertical (XX') et orientée vers l'extérieur du châssis (10) du véhicule (1).

3. Véhicule (1) selon la revendication 2, **caractérisé en ce que** ladite assise mobile considérée (31 ; 32 ; 33) est par ailleurs mobile en translation le long de glissières parallèles intégrées au charriot (60) pour l'amener notamment de la deuxième position vers une troisième position dans laquelle ladite assise (31 ; 32 ; 33) dépasse latéralement de l'extérieur du châssis (10).

4. Véhicule selon l'une quelconque des revendications précédentes, **caractérisé en ce qu'**il comporte plusieurs assises (31 ; 32) monoplace adjacentes transversalement démontables et remplaçables par une unique assise multiplaces telle qu'un banc.

5. Véhicule (1) selon l'une quelconque des revendications précédentes, **caractérisé en ce que** chaque mécanisme (50) à propulsion humaine comporte un pédalier (53) relié à une roue motrice (14a ; 14b) à l'aide d'un organe mobile de transmission de puissance (54) tel qu'une chaine à maillons articulés, des engrenages ou une courroie crantée.

6. Véhicule (1) selon la revendication 5, **caractérisé en ce que** l'un au moins des pédaliers (53) est en prise directe avec la roue motrice (14a ; 14b) considérée à l'aide dudit organe mobile de transmission de puissance (54).

7. Véhicule (1) selon la revendication 5, **caractérisé en ce que** l'un au moins des pédaliers (53) est relié à une génératrice intermédiaire (55) de courant à l'aide dudit organe mobile de transmission de puissance (54), ladite génératrice intermédiaire (55) alimentant en énergie électrique un moteur (56) intégré à la roue motrice (14a ; 14b) considérée.

8. Véhicule (1) selon l'une quelconque des revendications 5 à 7, **caractérisé en ce que** les organes mobiles de transmission de puissance (54) sont indépendants et les pédaliers (53) sont débrayables et totalement indépendants les uns des autres, permettant à chaque passager de pédaler quand il le souhaite, et avec l'intensité et le rythme qu'il souhaite donner à chaque instant.

9. Véhicule (1) selon l'une quelconque des revendications 5 à 8, **caractérisé en ce que** l'un au moins des pédaliers (53) est mobile verticalement en translation le long d'un support tubulaire (51) et son organe mobile de transmission de puissance associé (54) présente une longueur variable de sorte que ledit pédalier (53) peut être déplacé vers une position supérieure d'élévation et se transformer en maindalier (53a), utilisable avec les mains de l'occupant placé sur ladite assise correspondante.

10. Véhicule (1) selon l'une quelconque des revendications 5 à 9, **caractérisé en ce que** l'ensemble constitué par au moins un pédalier (53), son support (51) et son organe mobile de transmission de puissance (54) est totalement escamotable du châssis (10).

11. Véhicule (1) selon l'une quelconque des revendications 5 à 10, **caractérisé en ce que** l'un au moins des pédaliers (53) est pourvu d'une assistance électrique comprenant notamment un moteur électrique (80) de puissance nominale inférieure ou égale à 250W connecté à une batterie (90).

12. Véhicule (1) selon la revendication précédente, **caractérisé en ce qu'**il comporte un premier moteur (80) à couple élevé, typiquement entre environ 100 et 200 Nm, et un seconde moteur (80) à couple faible, typiquement entre environ 40 et 80 Nm, connectés au même mécanisme (50) à propulsion humaine ou à différents mécanismes (50) à propulsion humaine.

13. Véhicule (1) selon la revendication précédente, **caractérisé en ce que** le châssis tubulaire (10) est recouvert au moins partiellement d'un panneau photovoltaïque (25) pour recharger la batterie (90).

14. Véhicule (1) selon l'une quelconque des revendications 11 à 13, **caractérisé en ce qu'**il comporte en outre au moins un système de freinage régénératif et relié à la batterie (90) pour recharger cette dernière.

15. Véhicule (1) selon l'une quelconque des revendications précédentes, **caractérisé en ce que** chaque essieux (12, 14) comporte une suspension à lame (100) réalisée en matériau composite à base de carbone.

16. Véhicule (1) selon la revendications précédente, **caractérisé en ce que** l'essieux avant (12) comporte un unique amortisseur (101) à lame disposé transversalement et faisant office de barre anti-roulis tandis que chaque roue (14a, 14b) de l'essieux arrière (14) comporte son propre amortisseur (102) à lame disposé longitudinalement.

17. Véhicule (1) selon l'une quelconque des revendications précédentes, **caractérisé en ce que** son châssis (10) présente une largeur (L) inférieure ou égale à 1m15 et de préférence inférieur à 1m10.
